# FASCICULE DE BREVET EUROPEEN

(11) **EP 3 511 683 B1**
(45) Date de publication et mention de la délivrance du brevet: **20.04.2022**
(21) Numéro de dépôt: 18150971.2
(22) Date de dépôt: 10.01.2018
(51) Int. Cl.: G01F 13/00, G01F 15/00, G01F 1/76

(54) **PROCÉDÉ DE CONTRÔLE D'UNE INSTALLATION DE DOSAGE**
STEUERUNGSVERFAHREN EINER DOSIERANLAGE
METHOD FOR CONTROLLING A METERING INSTALLATION

(43) Date de publication de la demande: 17.07.2019
(73) Titulaire: ABB France, 95800 Cergy Saint Christophe (FR)
(72) Inventeur: RENAUD, Philippe, 73410 EPERSY-ENTRELACS (FR)
(74) Mandataire: Germain Maureau

(56) Documents cités:
- EP-A1- 0 611 172
- EP-A2- 2 650 657
- CN-A- 104 857 887
- US-A1- 2013 104 668

## Description

### Domaine de l'invention

La présente invention concerne un procédé de contrôle d'une installation de dosage et une installation de dosage.

### Art antérieur

Il est connu d'utiliser une installation de dosage pour mélanger un fluide avec un fluide additionnel.

De telles installations sont présentées par exemple dans les documents US 2013/104668 A1, EP 0 611 172 A1 ou CN 104 857 887 A. L'installation de dosage est prévue pour contrôler les débits de fluide et de fluide additionnel.

Pour ce faire l'installation de dosage comprend un débitmètre mesurant le débit de fluide et un autre débitmètre mesurant le débit de fluide additionnel. Pour assurer un dosage exact, il apparait important de s'assurer du bon fonctionnement des débitmètres.

Une possibilité consiste à mettre régulièrement l'installation à l'arrêt puis à démonter les débitmètres pour vérifier sur un banc d'essai si les valeurs mesurées correspondent aux certificats d'étalonnage du fournisseur.

Cette vérification peut s'avérer fastidieuse car le banc d'essai est souvent localisé chez le fournisseur, c'est-à-dire sur un site distant de celui où est localisée l'installation de dosage.

La présente invention vise à résoudre tout ou partie des inconvénients mentionnés ci-dessus.

### Exposé de l'invention

A cet effet, la présente invention concerne un procédé de contrôle d'une installation de dosage, l'installation de dosage comprenant une conduite de collecte, un premier tuyau d'injection raccordé fluidiquement à la conduite de collecte et un deuxième tuyau d'injection raccordé fluidiquement à la conduite de collecte, le premier tuyau d'injection étant pourvu d'un premier débitmètre et le deuxième tuyau d'injection étant pourvu d'un deuxième débitmètre, le procédé de contrôle comprenant les étapes suivantes :
- établissement d'un flux d'un fluide selon un parcours de contrôle passant par le premier tuyau d'injection, par le deuxième tuyau d'injection et par au moins une portion de la conduite de collecte ;
- collecte d'une première valeur de mesure du premier débitmètre et d'une deuxième valeur de mesure du deuxième débitmètre lorsque le flux est établi ;
- détermination d'une différence entre la première valeur de mesure et de la deuxième valeur de mesure ;
- comparaison de la différence à une valeur seuil de dysfonctionnement ;
- génération d'un signal d'alerte si la différence est supérieure à la valeur seuil de dysfonctionnement.

Par parcours de contrôle on entend une succession de conduites raccordées fluidiquement sans qu'il n'y ait d'entrée ou de sortie de fluide sur la longueur de ladite succession de conduites.

La valeur seuil de dysfonctionnement correspond à une différence minimale en deçà de laquelle il est considéré que deux débitmètres mesurent avec suffisamment de précision le même débit.

La valeur seuil de dysfonctionnement peut être définie par un utilisateur ou correspondre à la précision d'un ou de plusieurs débitmètres.

Le procédé de contrôle permet de vérifier le bon fonctionnement des deux débitmètres ou le dysfonctionnement de l'un des deux débitmètres, la probabilité qu'un dysfonctionnement simultané des deux débitmètres ait pour conséquence une différence inférieure à la valeur seuil de dysfonctionnement étant faible.

Le procédé de contrôle peut être réalisé sans avoir à modifier l'installation de dosage puisque le premier tuyau d'injection, le deuxième tuyau d'injection et la conduite de collecte sont utilisés pour lors de dosages réalisés par l'installation de dosage.

Ainsi pour s'assurer du bon fonctionnement du premier débitmètre et du deuxième débitmètre ni élément additionnel ni opération de montage et/ou de démontage n'est nécessaire.

Le présent procédé de contrôle permet ainsi de réaliser de manière fiable un contrôle du bon fonctionnement du premier débitmètre et du deuxième débitmètre et également de gagner du temps par rapport aux procédés de contrôle classiques comme ceux-ci nécessitent le démontage et le test du premier débitmètre et/ou du deuxième débitmètre sur un banc d'essai dédié.

Selon un aspect de l'invention, le procédé de contrôle de l'installation de dosage comprend en outre les étapes suivantes :
- arrêt du flux;
- établissement d'un flux alternatif de fluide ou d'un fluide alternatif selon un parcours de contrôle alternatif passant par le premier tuyau d'injection ou le deuxième tuyau d'injection ; par un troisième tuyau d'injection et par au moins une portion alternative de la conduite de collecte, le troisième tuyau d'injection étant pourvu d'un troisième débitmétre et étant raccordé fluidiquement à la conduite de collecte,
- collecte d'une troisième valeur de mesure du troisième débitmètre et d'une valeur additionnelle de mesure du premier débitmètre ou du deuxième débitmètre lorsque le flux alternatif est établi,
- détermination d'une différence additionnelle entre la troisième valeur de mesure et de la valeur additionnelle de mesure ;
- comparaison de la différence additionnelle à la valeur seuil de dysfonctionnement ou à une valeur seuil alternative de dysfonctionnement ;
- génération d'un signal d'alerte additionnel si la différence additionnelle est supérieure à la valeur seuil de dysfonctionnement ou la valeur seuil alternative de dysfonctionnement.

En comparant les débitmètres deux à deux, il est possible de déterminer quel débitmètre est susceptible d'être défectueux.

En effet, le débitmètre étant à la fois sur le parcours de contrôle et sur le parcours de contrôle alternatif ayant été testé deux fois, les probabilités sont fortes que ce se soit ce débitmètre qui soit défectueux si à la fois un signal d'alerte et un signal d'alerte additionnel ont été générés.

Cette disposition permet donc de déterminer rapidement et de manière fiable si un ou plusieurs débitmètres d'une installation de dosage sont défectueux.

Selon un aspect de l'invention, le flux alternatif s'écoule selon un débit massique constant. Cette disposition permet d'améliorer la qualité des mesures.

Selon un aspect de l'invention, le procédé de contrôle de l'installation de dosage comprend une étape de disposition de vannes de l'installation de dosage selon une configuration de contrôle précédant l'étape d'établissement du flux et, le cas échéant une étape de disposition des vannes selon une configuration de contrôle alternative précédant l'étape d'établissement du flux alternatif.

Cette disposition permet d'établir rapidement et automatiquement le flux et, le cas échéant, le flux alternatif. Il est ainsi possible par la commande des vannes d'automatiser le procédé de contrôle de manière à épargner du temps de travail pour un utilisateur de l'installation de dosage.

Ce contrôle automatique peut être réalisé régulièrement par exemple une fois par jour, ou encore à chaque production. Un mauvais dosage est identifié rapidement.

Par ailleurs le fait d'utiliser des vannes pour passer en configuration de contrôle et, le cas échéant, en configuration de contrôle alternative, évite tout risque de fuite ou de contamination de l'utilisateur de l'installation de dosage ou de l'environnement proche.

Selon un aspect de l'invention, au moins une vanne parmi les vannes de l'installation de dosage est ménagée dans la conduite de collecte de manière à ce que le parcours de contrôle, et, le cas échant le parcours de contrôle alternatif contourne au moins une partie de la conduite de collecte.

Cette disposition permet de définir aisément le parcours de contrôle, et, le cas échéant le parcours de contrôle alternatif de manière à les faire passer par les débitmètres correspondant. La construction de l'installation de dosage reste ainsi simple.

Selon un aspect de l'invention :
- une première vanne parmi les vannes de l'installation de dosage est ménagée dans un premier tuyau de contournement reliant fluidiquement la conduite de collecte au premier tuyau d'injection, le premier tuyau de contournement étant configuré de manière à permettre une circulation fluidique depuis et vers la conduite de collecte via le premier débitmètre, et/ou
- une deuxième vanne parmi les vannes de l'installation de dosage est ménagée dans un deuxième tuyau de contournement reliant fluidiquement la conduite de collecte au deuxième tuyau d'injection, le deuxième tuyau de contournement étant configuré de manière à permettre une circulation fluidique depuis et vers la conduite de collecte via le deuxième débitmètre ,et, le cas échéant,
- une troisième vanne parmi les vannes de l'installation de dosage est ménagée dans un troisième tuyau de contournement reliant fluidiquement la conduite de collecte au troisième tuyau d'injection, le troisième tuyau de contournement étant configuré de manière à permettre une circulation fluidique depuis et vers la conduite de collecte via le troisième débitmètre.

Cette disposition permet de réaliser la disposition en configuration de contrôle, ou, le cas échéant en configuration de contrôle alternative simplement grâce à la présence des tuyaux de contournement.

Ainsi le procédé de contrôle est aisé à mettre en œuvre et ne nécessite pas une installation de dosage de conception complexe. Cette simplicité de conception participe également à la fiabilité de l'installation de dosage.

Selon un aspect de l'invention, lors l'étape d'établissement du flux, le fluide est injecté dans la conduite de collecte via le premier tuyau d'injection, ou dans lequel, le cas échéant, lors l'étape d'établissement du flux alternatif, le fluide est injecté dans la conduite de collecte via le premier tuyau d'injection ou le fluide alternatif est injecté dans la conduite de collecte via le deuxième tuyau d'injection.

Cette disposition permet d'utiliser le fluide ou le fluide alternatif, respectivement délivrés par le premier tuyau d'injection et le deuxième tuyau d'injection pour contrôler le bon fonctionnement des débitmètres concernés.

Ainsi il apparait que le fluide et le fluide alternatif ne sont pas des fluides spécifiquement dédiés au contrôle des débitmètres mais des fluides destinés à être compris dans le produit final réalisé par l'installation de dosage ou produit dosé.

Selon un aspect de l'invention, le parcours de contrôle, et, le cas échéant, le parcours de contrôle alternatif se terminent par une sortie de collecte d'un produit dosé de l'installation de dosage, ladite sortie de collecte étant raccordée fluidiquement à la conduite de collecte.

Cette disposition permet de récupérer le fluide ou le cas échéant le fluide alternatif après la collecte des valeurs de mesure de manière à les inclure dans le produit dosé.

Ainsi la collecte des valeurs de mesure est réalisée pendant le dosage du produit dosé, ce qui permet de contrôler le bon fonctionnement des débitmètres pendant l'utilisation de l'installation de dosage.

Selon un aspect de l'invention, le procédé de contrôle de l'installation de dosage comprend une étape d'injection dans laquelle le fluide est injecté dans la conduite de collecte via le premier tuyau d'injection et/ou le fluide alternatif est injecté dans le tuyau de collecte via le deuxième tuyau d'injection, et, le cas échéant, un fluide additionnel est injecté dans la conduite de collecte via le troisième tuyau d'injection, l'étape d'injection précédant l'étape d'établissement du flux.

Il apparait ainsi que l'étape d'injection est une étape de fonctionnement de l'installation de dosage. Cette disposition permet donc de faire apparaître que le contrôle des débitmètres est ainsi intégré au processus de réalisation du dosage et qu'aucun processus spécifique de mesure n'est nécessaire hors période de dosage.

Selon un aspect de l'invention, le fluide est une huile, et, le cas échéant le fluide alternatif est une huile alternative.

Cette disposition permet de mettre en œuvre le procédé de contrôle dans toute installation de dosage d'huile.

L'utilisation d'huile, et le cas échant d'huile alternative permet également de supprimer toute trace de fluide additionnel.

Selon un aspect de l'invention, l'étape de collecte de la première valeur de mesure et de la deuxième valeur de mesure, ou, le cas échéant l'étape de collecte de la troisième valeur de mesure et de la valeur de mesure additionnelle, est suivi par une étape de vidange de la conduite de collecte, du premier tuyau d'injection, du deuxième tuyau d'injection, et, le cas échéant du troisième tuyau d'injection.

Cette disposition permet de récupérer tout ce qui a été injecté pour réaliser le contrôle des débitmètres dans le produit final qui est le produit dosé. Il n'y a ainsi pas de perte d'huile ou d'huile alternative lors du contrôle des débitmètres.

Selon un aspect de l'invention, l'étape de vidange est une étape de vidange par gravité.

Ainsi la conception de la tuyauterie de l'installation de dosage permet de réaliser la vidange sans dispositif additionnel dédié.

Selon un aspect de l'invention, le premier débitmètre, le deuxième débitmètre, et, le cas échéant le troisième débitmètre sont des débitmètres massiques.

Cette disposition permet de contrôler les débitmètres sans avoir à les enlever de l'installation de dosage pour tester leur bon fonctionnement sur un banc d'essai dédié.

En effet, sans le procédé de contrôle, un démontage et un test sur un banc d'essai dédié serait nécessaire.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
- la figure 1 est une vue schématique d'une installation de dosage durant une étape d'injection ;
- la figure 2 est une vue schématique de l'installation de dosage durant une étape de collecte d'une première et d'une deuxième valeur de mesure ;
- la figure 3 est une vue schématique de l'installation de dosage durant une étape de collecte d'une troisième valeur de mesure et d'une valeur additionnelle de mesure ;
- la figure 4 est une vue schématique de l'installation de dosage durant une étape de collecte d'une troisième valeur de mesure et d'une valeur additionnelle de mesure selon une variante ;
- La figure 5 est un schéma représentant les étapes d'un procédé de contrôle de l'installation de dosage.

### Description en référence aux figures

### Installation de dosage

Dans la description détaillée qui va suivre des figures définies ci-dessus, les mêmes éléments ou les éléments remplissant des fonctions identiques pourront conserver les mêmes références de manière à simplifier la compréhension de l'invention.

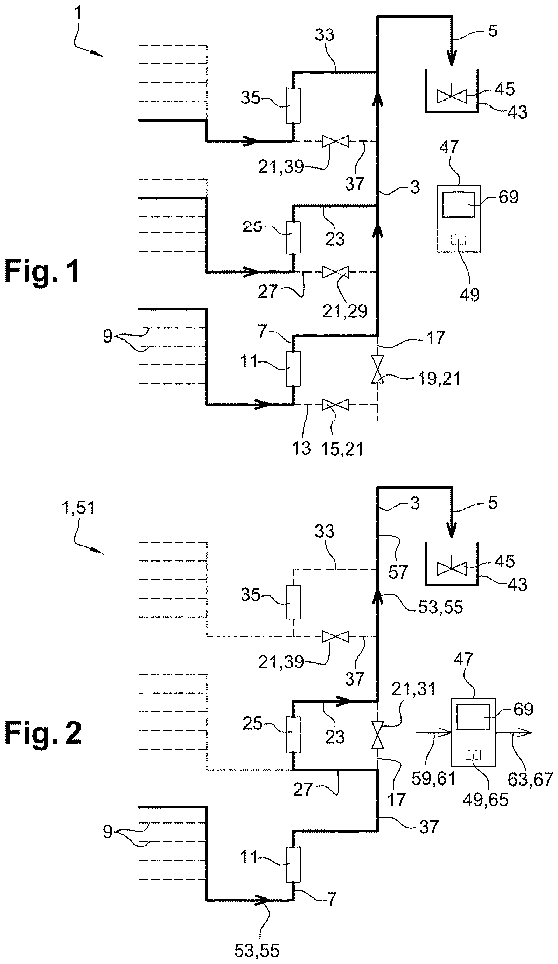

Comme illustré aux figures 1 à 4, une installation de dosage 1 comprend une conduite de collecte 3 et une sortie de collecte 5 raccordée fluidiquement à la conduite de collecte 3.

L'installation de dosage 1 comprend un premier tuyau d'injection 7 raccordé fluidiquement à la conduite de collecte 3 et agencé pour injecter un fluide dans la conduite de collecte 3.

Le fluide est mis en mouvement par une pompe dédiée. Dans le présent mode de réalisation il s'agit d'une huile de base. Le premier tuyau d'injection 7 est connecté fluidiquement à cinq entrées 9 qui fournissent différentes huiles selon le produit dosé ou produit final devant être obtenu par l'installation de dosage 1.

Le premier tuyau d'injection 7 est pourvu d'un premier débitmètre 11 qui est un débitmètre massique à effet Coriolis.

L'installation de dosage 1 comprend un premier tuyau de contournement 13 et une première vanne 15 agencée pour autoriser ou bloquer la circulation fluidique dans le premier tuyau de contournement 13.

Ainsi le premier tuyau de contournement 13 est configuré de manière à permettre une circulation fluidique depuis et vers la conduite de collecte 3 via le premier débitmètre 11.

Pour contourner une partie 17 de la conduite de collecte 3, la conduite de collecte 3 comprend une première vanne de blocage 19 comme illustré à la figure 1.

Dans les figures 1 à 4, il est à remarquer que les vannes 21 de l'installation de dosage 1 ne sont représentées que lorsqu'elles sont en position fermée, c'est-à-dire lorsqu'elles bloquent la circulation fluidique. La circulation fluidique est quant à elle représentée par des traits plus épais.

L'installation de dosage 1 comprend un deuxième tuyau d'injection 23 pourvu d'un deuxième débitmètre 25 massique à effet de Coriolis, le deuxième tuyau d'injection 23 étant également raccordé fluidiquement à la conduite de collecte 3.

Le deuxième tuyau d'injection 23 est agencé pour injecter dans la conduite de collecte 3 un fluide alternatif qui est, dans le mode de réalisation présenté, une huile alternative.

L'installation de dosage 1 comprend également un deuxième tuyau de contournement 27 et une deuxième vanne 29. La conduite de collecte 3 comprend également une deuxième vanne de blocage 31.

De manière similaire, l'installation de dosage 1 comprend un troisième tuyau d'injection 33 pourvu d'un troisième débitmètre 35 massique à effet de Coriolis.

Le troisième tuyau d'injection 33 est agencé pour injecter un fluide additionnel dans la conduite de collecte 3, le fluide additionnel étant un additif dans le mode de réalisation présenté.

L'installation de dosage 1 comprend également un troisième tuyau de contournement 37 et une troisième vanne 39. La conduite de collecte 3 comprend une troisième vanne de blocage 41 agencée de manière similaire à la première vanne de blocage 19 et à la deuxième vanne de blocage 31.

L'installation de dosage 1 comprend enfin une cuve de collecte 43 du produit dosé dotée d'un agitateur 45 et une unité de traitement 47 pourvue d'un processeur 49.

Le processeur 49 est agencé pour recueillir des valeurs de mesure des débitmètres 11, 25, 35, déterminer ou enregistrer des valeurs seuils de dysfonctionnements relatives aux débitmètres 11, 25, 35, déterminer des différences entre valeurs de mesure et les comparer aux valeurs seuil de dysfonctionnement comme expliqué plus loin dans la description du procédé de commande.

Le processeur 49 de l'unité de traitement 47 est également agencé pour commander la commutation des vannes 21 de l'installation de dosage 1.

Ainsi, l'installation de dosage 1 peut être de type SMB ou « Simultaneous Metering System », ILB ou « Inline Blending », IDS ou « Inline Dosing System », ISDS ou « Inline Simultaneous Dosing System », BDS ou « Batch dosing system » ou tout autre installation de dosage qui met en œuvre des dosages simultanés ou consécutifs contrôlés par débitmètres 11, 25, 35.

### Procédé de contrôle de l'installation de dosage

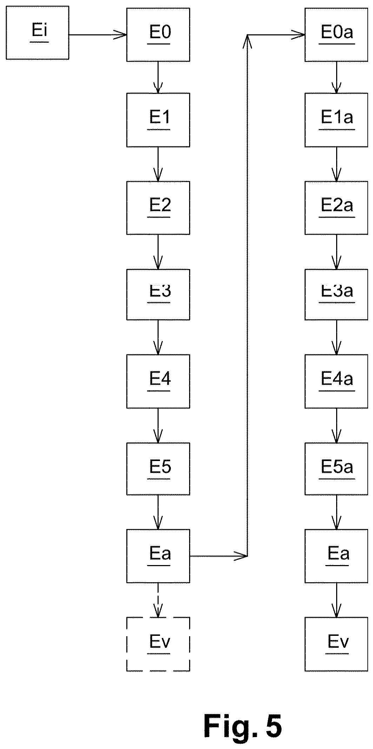

Comme illustré aux figures 1 et 5, le procédé de contrôle comprend une étape Ei d'injection. Lors de cette étape Ei, les trois tuyaux d'injection 7, 23, 33 alimentent simultanément la conduite de collecte 3.

Bien entendu, dans des modes de réalisation non décrits, seule une partie des tuyaux d'injection 7, 23, 33 peuvent alimenter la conduite de collecte 5. Cette étape Ei est en quelque sorte une étape de dosage classique pour ce type d'installation de dosage 1.

Comme illustré aux figures 2 et 5, le procédé de contrôle comprend ensuite une étape E0 de disposition des vannes 21 de l'installation de dosage 1 selon une configuration de contrôle 51.

Dans cette configuration 51, la deuxième vanne de blocage 31 est fermée et le troisième tuyau d'injection 33 n'alimente plus la conduite de collecte 3.

Le procédé de contrôle comprend ensuite une étape E1 d'établissement d'un flux 53 de débit massique constant de fluide injecté par le premier tuyau d'injection 7. Le flux 53 circule selon un parcours de contrôle 55 passant par le premier tuyau d'injection 7, le deuxième tuyau d'injection 23 et au moins une portion 57 de la conduite de collecte 3.

Le parcours de contrôle 55 est une succession de conduites raccordées fluidiquement sans qu'il n'y ait d'entrée ou de sortie de fluide sur la longueur de la succession de conduites.

Par le jeu des pressions et/ou des fermetures des vannes 21 dans l'installation de dosage 1, le parcours de contrôle 55 ne passe pas par le troisième tuyau d'injection 33.

Le procédé de contrôle comprend alors une étape E2 de collecte d'une première valeur de mesure 59 du premier débitmètre 11 et d'une deuxième valeur de mesure 61 du deuxième débitmètre 25. L'étape E2 de collecte est réalisée lorsque le flux 53 est établi.

Le procédé comprend ensuite une étape E3 de détermination d'une différence 63 entre la première valeur de mesure 59 et la deuxième valeur de mesure 61 qui est réalisée par le processeur 49.

Une étape E4 de comparaison de la différence 63 à une valeur seuil de dysfonctionnement 65 est ensuite réalisée.

La valeur seuil de dysfonctionnement 65 correspond à une différence minimale en deçà de laquelle il est considéré que deux débitmètres mesurent avec suffisamment de précision un même débit.

La valeur seuil de dysfonctionnement 65 peut être définie par un utilisateur ou correspondre à la précision d'un ou de plusieurs débitmètres.

Le procédé de contrôle comprend ensuite une étape E5 de génération d'un signal d'alerte 67 si la différence 63 est supérieure à la valeur seuil de dysfonctionnement 65. Cette étape E5 est également réalisée par le processeur 49.

Lorsqu'un signal d'alerte 67 est généré, l'utilisateur peut être averti par une interface 69 de l'installation de dosage 1. L'utilisateur est ainsi informé que l'un des deux débitmètres 11, 25 contrôlé est potentiellement défectueux.

Lors de cette étape E5, le fluide est récupéré dans la cuve de collecte 43 : le fluide servant au test des débitmètres 11, 25 est donc utilisé pour le produit final.

Le procédé comprend ensuite une étape Ea d'arrêt du flux 53.

Une étape Ev de vidange de la conduite de collecte 3 et des tuyaux d'injection 7, 23, 33 peut ensuite être réalisée par exemple par gravité si l'installation de dosage 1 est conçue pour.

L'étape Ev de vidange peut également être une étape finale lorsque l'installation de dosage 1 ne comprend que deux débitmètres 11, 25 à tester.

Cette étape Ev est optionnelle lorsque l'installation de dosage 1 comprend au moins trois débitmètres 11, 25, 35 comme c'est le cas dans le présent mode de réalisation.

En effet, dans le présent mode de réalisation, l'étape Ea d'arrêt du flux 53 peut être suivie d'une étape E0a de disposition des vannes 21 selon une configuration de contrôle alternative 71.

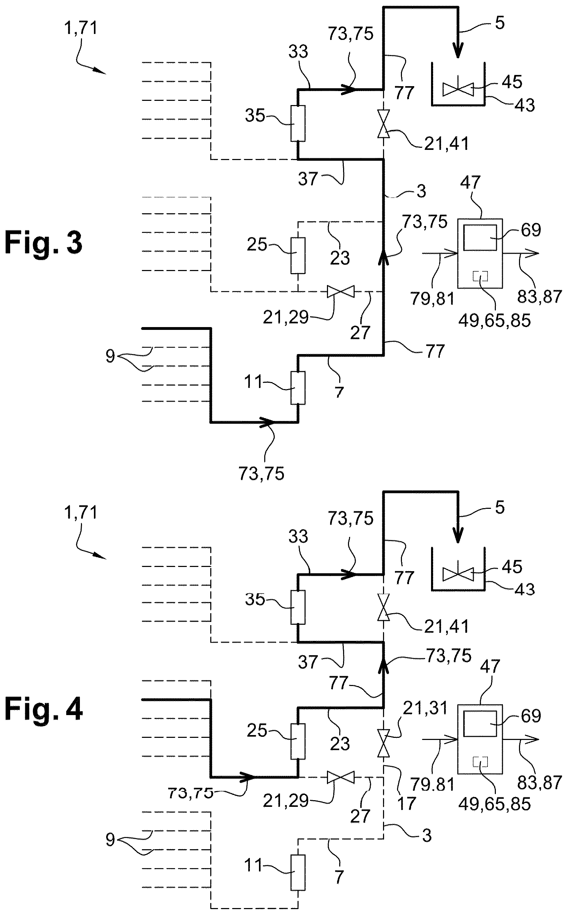

Les figures 3 et 4 présentent deux variantes de la configuration de contrôle alternative 71. Ainsi seule la variante de la figure 3 est décrite ci-après car les étapes du procédé de contrôle sont identiques pour la variante de la figure 4. Seuls les numéros des vannes 21 et des tuyaux concernés changent.

Comme illustré à la figure 3, le procédé de contrôle comprend une étape E1a d'établissement d'un flux alternatif 73 de débit massique constant de fluide.

Le flux alternatif 73 s'écoule selon un parcours de contrôle alternatif 75 passant par le premier tuyau d'injection 7, le troisième tuyau d'injection 33 et au moins une portion alternative 77 de la conduite de collecte 3.

Une fois le flux alternatif 73 établi, le procédé de contrôle comprend une étape E2a de collecte d'une valeur additionnelle de mesure 79 du premier débitmètre 11 et d'une troisième valeur de mesure 81 du troisième débitmètre 35.

Le procédé de contrôle comprend ensuite une étape E3a de détermination d'une différence additionnelle 83 entre la valeur additionnelle de mesure 79 et la troisième valeur de mesure 81.

Une étape E4a de comparaison de la différence additionnelle 83 par rapport à la valeur seuil de dysfonctionnement 65 ou une valeur seuil alternative de dysfonctionnement 85 est ensuite réalisée.

Le choix de la valeur seuil de dysfonctionnement 65 ou de la valeur seuil alternative de dysfonctionnement 85 peut par exemple dépendre du fluide utilisé ou des caractéristiques du troisième débitmètre 35 s'il est différent des deux premiers 11, 25.

Cette étape E4a est ensuite suivie par une étape E5a de génération d'un signal d'alerte additionnel 87 lorsque la différence additionnelle 83 est supérieure à la valeur seuil de dysfonctionnement 65 ou à la valeur seuil alternative de dysfonctionnement 85.

Le procédé se termine par une étape Ea d'arrêt du flux alternatif 73 et une étape Ev de vidange dans le but de récupérer le fluide dans la cuve de collecte 43 de produit dosé.

Il est ensuite possible de répéter les étapes E0a à E5a selon la configuration de contrôle alternative 71 de la figure 4. Ainsi les débitmètres 11, 25, 35 sont chacun testés deux fois, ce qui permet de déduire quel débitmètre 11, 25, 35 est défectueux.

En effet, si chaque test dans lequel le troisième débitmètre 35 est compris a pour conséquence l'émission d'un signal d'alerte additionnel 87, ce sera forcément ce débitmètre 35 qui est défectueux.

Le présent procédé permet ainsi d'inclure une phase de test lors du fonctionnement de l'installation de dosage dans le but de déterminer si un débitmètre 11, 25, 35 est défectueux. Aucun démontage n'est donc nécessaire.

Il est ainsi possible d'éviter de réaliser un mauvais dosage car la détection d'un défaut d'un débitmètre 11, 25, 35 peut être réalisée de manière régulière et automatique.

Comme il va de soi, l'invention ne se limite pas à la seule forme d'exécution décrite ci-dessus à titre d'exemple.

## Revendications

1. Procédé de contrôle d'une installation de dosage (1), l'installation de dosage (1) comprenant une conduite de collecte (3), un premier tuyau d'injection (7) raccordé fluidiquement à la conduite de collecte (3) et un deuxième tuyau d'injection (23) raccordé fluidiquement à la conduite de collecte (3), le premier tuyau d'injection (7) étant pourvu d'un premier débitmètre (11) et le deuxième tuyau d'injection (23) étant pourvu d'un deuxième débitmètre (25), le procédé de contrôle comprenant les étapes suivantes :
- (E1) établissement d'un flux (53) d'un fluide selon un parcours de contrôle (55) passant par le premier tuyau d'injection (7), par le deuxième tuyau d'injection (23) et par au moins une portion (57) de la conduite de collecte (3) ;
- (E2) collecte d'une première valeur de mesure (59) du premier débitmètre (11) et d'une deuxième valeur de mesure (61) du deuxième débitmètre (25) lorsque le flux (53) est établi ;
- (E3) détermination d'une différence (63) entre la première valeur de mesure (59) et de la deuxième valeur de mesure (61) ;
- (E4) comparaison de la différence (63) à une valeur seuil de dysfonctionnement (65) ;
- (E5) génération d'un signal d'alerte (67) si la différence est supérieure à la valeur seuil de dysfonctionnement (65).

2. Procédé de contrôle de l'installation de dosage (1) selon la revendication 1, comprenant en outre les étapes suivantes :
- (Ea) arrêt du flux (53) ;
- (E1a) établissement d'un flux alternatif (73) de fluide ou d'un fluide alternatif selon un parcours de contrôle alternatif (75) passant par le premier tuyau d'injection (7) ou le deuxième tuyau d'injection (23) ; par un troisième tuyau d'injection (33) et par au moins une portion alternative (77) de la conduite de collecte (3), le troisième tuyau d'injection (33) étant pourvu d'un troisième débitmétre (35) et étant raccordé fluidiquement à la conduite de collecte (3),
- (E2a) collecte d'une troisième valeur de mesure (81) du troisième débitmètre (35) et d'une valeur additionnelle de mesure (79) du premier débitmètre (11) ou du deuxième débitmètre (25) lorsque le flux alternatif (73) est établi,
- (E3a) détermination d'une différence additionnelle (83) entre la troisième valeur de mesure (81) et de la valeur additionnelle de mesure (79) ;
- (E4a) comparaison de la différence additionnelle (83) à la valeur seuil de dysfonctionnement (65) ou à une valeur seuil alternative de dysfonctionnement (85) ;
- (E5a) génération d'un signal d'alerte additionnel (87) si la différence additionnelle (83) est supérieure à la valeur seuil de dysfonctionnement (65) ou la valeur seuil alternative de dysfonctionnement (85).

3. Procédé de contrôle de l'installation de dosage (1) selon l'une des revendications 1 ou 2, comprenant une étape (E0) de disposition de vannes (21) de l'installation de dosage (1) selon une configuration de contrôle (51) précédant l'étape (E1) d'établissement du flux (53) et, le cas échéant une étape (E0a) de disposition des vannes (21) selon une configuration de contrôle alternative (71) précédant l'étape (E1a) d'établissement du flux alternatif (73).

4. Procédé de contrôle de l'installation de dosage (1) selon la revendication 3, dans lequel au moins une vanne (21) parmi les vannes (21) de l'installation de dosage (1) est ménagée dans la conduite de collecte (3) de manière à ce que le parcours de contrôle (55), et, le cas échant le parcours de contrôle alternatif (75) contourne au moins une partie (17) de la conduite de collecte (3).

5. Procédé de contrôle de l'installation de dosage (1) selon l'une des revendications 3 ou 4, dans lequel :
- une première vanne (15) parmi les vannes (21) de l'installation de dosage (1) est ménagée dans un premier tuyau de contournement (13) reliant fluidiquement la conduite de collecte (3) au premier tuyau d'injection (7), le premier tuyau de contournement (13) étant configuré de manière à permettre une circulation fluidique depuis et vers la conduite de collecte (3) via le premier débitmètre (11), et/ou
- une deuxième vanne (29) parmi les vannes (21) de l'installation de dosage (1) est ménagée dans un deuxième tuyau de contournement (27) reliant fluidiquement la conduite de collecte (3) au deuxième tuyau d'injection (23), le deuxième tuyau de contournement (27) étant configuré de manière à permettre une circulation fluidique depuis et vers la conduite de collecte (3) via le deuxième débitmètre (25) ,et, le cas échéant,
- une troisième vanne (39) parmi les vannes (21) de l'installation de dosage (1) est ménagée dans un troisième tuyau de contournement (37) reliant fluidiquement la conduite de collecte (3) au troisième tuyau d'injection (33), le troisième tuyau de contournement (37) étant configuré de manière à permettre une circulation fluidique depuis et vers la conduite de collecte (3) via le troisième débitmètre (35).

6. Procédé de contrôle de l'installation de dosage (1) selon l'une des revendications 1 à 5, dans lequel, lors de l'étape (E1) d'établissement du flux (53), le fluide est injecté dans la conduite de collecte (3) via le premier tuyau d'injection (7), ou dans lequel, le cas échéant, lors de l'étape (E1a) d'établissement du flux alternatif (73), le fluide est injecté dans la conduite de collecte (3) via le premier tuyau d'injection (7) ou le fluide alternatif est injecté dans la conduite de collecte (3) via le deuxième tuyau d'injection (23).

7. Procédé de contrôle de l'installation de dosage (1) selon l'une des revendications 1 à 6, dans lequel le parcours de contrôle (55), et, le cas échéant, le parcours de contrôle alternatif (75) se terminent par une sortie de collecte (5) d'un produit dosé de l'installation de dosage (1), ladite sortie de collecte (5) étant raccordée fluidiquement à la conduite de collecte (3).

8. Procédé de contrôle de l'installation de dosage (1) selon la revendication 7, comprenant une étape (Ei) d'injection dans laquelle le fluide est injecté dans la conduite de collecte (3) via le premier tuyau d'injection (7) et/ou le fluide alternatif est injecté dans le tuyau de collecte (3) via le deuxième tuyau d'injection (23), et, le cas échéant, un fluide additionnel est injecté dans la conduite de collecte (23) via le troisième tuyau d'injection (33), l'étape (Ei) d'injection précédant l'étape (E1) d'établissement du flux (53).

9. Procédé de contrôle de l'installation de dosage (1) selon l'une des revendications 1 à 8, dans lequel le fluide est une huile, et, le cas échéant le fluide alternatif est une huile alternative.

10. Procédé de contrôle de l'installation de dosage (1) selon l'une des revendications 1 à 9, dans lequel l'étape (E2) de collecte de la première valeur de mesure (59) et de la deuxième valeur de mesure (61), ou, le cas échéant l'étape (E2a) de collecte de la troisième valeur de mesure (81) et de la valeur de mesure additionnelle (83), est suivi par une étape (Ev) de vidange de la conduite de collecte (3), du premier tuyau d'injection (7), du deuxième tuyau d'injection (23), et, le cas échéant du troisième tuyau d'injection (33).

11. Procédé de contrôle de l'installation de dosage (1) selon la revendication 10, dans lequel l'étape (Ev) de vidange est une étape de vidange par gravité.

12. Procédé de contrôle de l'installation de dosage (1) selon l'une des revendications 1 à 11, dans lequel le premier débitmètre (11), le deuxième débitmètre (25), et, le cas échéant le troisième débitmètre (35) sont des débitmètres massiques.

13. Installation de dosage (1) configurée pour mettre en œuvre les étapes d'un procédé de contrôle selon l'une des revendications 1 à 12, l'installation de dosage (1) comprenant
la conduite de collecte (3),
le premier tuyau d'injection (7) raccordé fluidiquement à la conduite de collecte (3) et
le deuxième tuyau d'injection (23) raccordé fluidiquement à la conduite de collecte (3),le premier tuyau d'injection (7) étant pourvu du premier débitmètre (11) et le deuxième tuyau d'injection (23) étant pourvu du deuxième débitmètre (25),
l'installation de dosage (1) comprenant aussi un parcours de contrôle (55) passant par le premier tuyau d'injection (7), par le deuxième tuyau d'injection (23) et par au moins la portion (57) de la conduite de collecte (3);
l'installation de dosage (1) comprenant enfin une unité de traitement (47) pourvue d'un processeur (49), le processeur étant agencé pour recueillir des valeurs de mesure des débitmètres (11, 25, 35), déterminer ou enregistrer des valeurs seuils de dysfonctionnements relatives aux débitmètres et déterminer des différences entre valeurs de mesure et les comparer aux valeurs seuil de dysfonctionnement.

## Patentansprüche

1. Steuerungsverfahren einer Dosieranlage (1), wobei die Dosieranlage (1) eine Sammelleitung (3), ein mit der Sammelleitung (3) fluidisch verbundenes erstes Injektionsrohr (7) und ein mit der Sammelleitung (3) fluidisch verbundenes zweites Injektionsrohr (23) umfasst, wobei das erste Injektionsrohr (7) mit einem ersten Durchflussmesser (11) versehen ist und das zweite Injektionsrohr (23) mit einem zweiten Durchflussmesser (25) versehen ist, wobei das Steuerungsverfahren die folgenden Schritte umfasst:
- (E1) Erstellung einer Strömung (53) eines Fluids entlang eines Steuerpfads (55), der durch das erste Injektionsrohr (7), durch das zweite Injektionsrohr (23) und durch mindestens einen Abschnitt (57) der Sammelleitung (3) verläuft;
- (E2) Erfassung eines ersten Messwerts (59) vom ersten Durchflussmesser (11) und eines zweiten Messwerts (61) vom zweiten Durchflussmesser (25), wenn die Strömung (53) erstellt ist;
- (E3) Ermittlung einer Differenz (63) zwischen dem ersten Messwert (59) und dem zweiten Messwert (61);
- (E4) Vergleich der Differenz (63) mit einem Störungsschwellenwert (65);
- (E5) Erzeugung eines Warnsignals (67), wenn die Differenz höher als der Störungsschwellenwert (65) ist.

2. Steuerungsverfahren der Dosieranlage (1) nach Anspruch 1, ferner die folgenden Schritte umfassend:
- (Ea) Stoppen der Strömung (53);
- (E1a) Erstellung einer alternativen Strömung (73) eines Fluids oder eines alternativen Fluids entlang eines alternativen Steuerpfads (75), der durch das erste Injektionsrohr (7) oder durch das zweite Injektionsrohr (23) verläuft; durch ein drittes Injektionsrohr (33) und mindestens einen alternativen Abschnitt (77) der Sammelleitung (3), wobei das dritte Injektionsrohr (33) mit einem dritten Durchflussmesser (35) versehen und fluidisch mit der Sammelleitung (3) verbunden ist,
- (E2a) Erfassung eines dritten Messwerts (81) vom dritten Durchflussmesser (35) und eines zusätzlichen Messwerts (79) vom ersten Durchflussmesser (11) oder vom zweiten Durchflussmesser (25), wenn die alternative Strömung (73) erstellt ist,
- (E3a) Ermittlung einer zusätzlichen Differenz (83) zwischen dem dritten Messwert (81) und dem zusätzlichen Messwert (79);
- (E4a) Vergleich der zusätzlichen Differenz (83) mit dem Störungsschwellenwert (65) oder mit einem alternativen Störungsschwellenwert (85);
- (E5a) Erzeugung eines zusätzlichen Warnsignals (87), wenn die zusätzliche Differenz (83) höher als der Störungsschwellenwert (65) oder der alternative Störungsschwellenwert (85) ist.

3. Steuerungsverfahren der Dosieranlage (1) nach einem der Ansprüche 1 oder 2, umfassend einen Schritt (E0) des Anordnens von Ventilen (21) der Dosieranlage (1) nach einer dem Schritt (E1) der Erstellung der Strömung (53) vorangehenden Steuerungskonfiguration (51) und, gegebenenfalls, einen Schritt (E0a) des Anordnens der Ventile (21) nach einer dem Schritt (E1a) der Erstellung der alternativen Strömung (73) vorangehenden alternativen Steuerungskonfiguration (71).

4. Steuerungsverfahren der Dosieranlage (1) nach Anspruch 3, wobei mindestens ein Ventil (21) der Ventile (21) der Dosieranlage (1) in der Sammelleitung (3) angeordnet wird, so dass der Steuerpfad (55) und gegebenenfalls der alternative Steuerpfad (75) mindestens einen Teil (17) der Sammelleitung (3) umgeht.

5. Steuerungsverfahren der Dosieranlage (1) nach einem der Ansprüche 3 oder 4, wobei:
- ein erstes Ventil (15) der Ventile (21) der Dosieranlage (1) in einem ersten Bypassrohr (13) angeordnet ist, das die Sammelleitung (3) mit dem ersten Injektionsrohr (7) fluidisch verbindet, wobei das erste Bypassrohr (13) so konfiguriert ist, dass es eine fluide Zirkulation von und zur Sammelleitung (3) via den ersten Durchflussmesser (11) ermöglicht, und/oder
- ein zweites Ventil (29) der Ventile (21) der Dosieranlage (1) in einem zweiten Bypassrohr (27) angeordnet ist, das die Sammelleitung (3) mit dem zweiten Injektionsrohr (23) fluidisch verbindet, wobei das zweite Bypassrohr (27) so konfiguriert ist, dass es eine fluide Zirkulation von und zur Sammelleitung (3) via den zweiten Durchflussmesser (25) ermöglicht und, gegebenenfalls,
- ein drittes Ventil (39) der Ventile (21) der Dosieranlage (1) in einem dritten Bypassrohr (37) angeordnet ist, das die Sammelleitung (3) mit dem dritten Injektionsrohr (33) fluidisch verbindet, wobei das dritte Bypassrohr (37) so konfiguriert ist, dass es eine fluide Zirkulation von und zur Sammelleitung (3) via den dritten Durchflussmesser (35) ermöglicht.

6. Steuerungsverfahren der Dosieranlage (1) nach einem der Ansprüche 1 bis 5, wobei während des Schrittes (E1) der Erstellung der Strömung (53) das Fluid via das erste Injektionsrohr (7) in die Sammelleitung (3) injiziert wird oder, wobei gegebenenfalls, während des Schrittes (E1a) der Erstellung der alternativen Strömung (73) das Fluid via das erste Injektionsrohr (7) in die Sammelleitung (3) injiziert wird oder das alternative Fluid via das zweite Injektionsrohr (23) in die Sammelleitung (3) injiziert wird.

7. Steuerungsverfahren der Dosieranlage (1) nach einem der Ansprüche 1 bis 6, wobei der Steuerpfad (55) und, gegebenenfalls, der alternative Steuerpfad (75) mit einem Sammelauslass (5) für ein dosiertes Produkt der Dosieranlage (1) enden, wobei der Sammelauslass (5) fluidisch mit der Sammelleitung (3) verbunden ist.

8. Steuerungsverfahren der Dosieranlage (1) nach Anspruch 7, umfassend einen Schritt (Ei) der Injektion, wobei das Fluid via das erste Injektionsrohr (7) in die Sammelleitung (3) injiziert wird und/oder das alternative Fluid via das zweite Injektionsrohr (23) in die Sammelleitung (3) injiziert wird und, gegebenenfalls, ein zusätzliches Fluid via das dritte Injektionsrohr (33) in die Sammelleitung (23) injiziert wird, wobei der Schritt (Ei) der Injektion dem Schritt (E1) der Erstellung der Strömung (53) vorangeht.

9. Steuerungsverfahren der Dosieranlage (1) nach einem der Ansprüche 1 bis 8, wobei das Fluid ein Öl ist und, gegebenenfalls, das alternative Fluid ein alternatives Öl ist.

10. Steuerungsverfahren der Dosieranlage (1) nach einem der Ansprüche 1 bis 9, wobei der Schritt (E2) des Erfassens des ersten Messwerts (59) und des zweiten Messwerts (61) oder, gegebenenfalls, der Schritt (E2a) des Erfassens des dritten Messwerts (81) und des zusätzlichen Messwerts (83) gefolgt ist von einem Schritt (Ev) des Entleerens der Sammelleitung (3), des ersten Injektionsrohrs (7), des zweiten Injektionsrohrs (23) und, gegebenenfalls, des dritten Injektionsrohrs (33).

11. Steuerungsverfahren der Dosieranlage (1) nach Anspruch 10, wobei der Schritt (Ev) des Entleerens ein Schritt des Schwerkraftentleerens ist.

12. Steuerungsverfahren der Dosieranlage (1) nach einem der Ansprüche 1 bis 11, wobei der erste Durchflussmesser (11), der zweite Durchflussmesser (25) und, gegebenenfalls, der dritte Durchflussmesser (35) Mengendurchflussmesser sind.

13. Dosieranlage (1), konfiguriert zur Durchführung der Schritte eines Steuerungsverfahrens nach einem der Ansprüche 1 bis 12, wobei die Dosieranlage (1) umfasst:
- die Sammelleitung (3),
- das erste Injektionsrohr (7), das fluidisch mit der Sammelleitung (3) verbunden ist, und
- das zweite Injektionsrohr (23), das fluidisch mit der Sammelleitung (3) verbunden ist, wobei das erste Injektionsrohr (7) mit dem ersten Durchflussmesser (11) versehen ist und das zweite Injektionsrohr (23) mit dem zweiten Durchflussmesser (25) versehen ist,
wobei die Dosieranlage (1) auch einen Steuerpfad (55) umfasst, der durch das erste Injektionsrohr (7), durch das zweite Injektionsrohr (23) und durch mindestens den Abschnitt (57) der Sammelleitung (3) verläuft;
wobei die Dosieranlage (1) schließlich eine Verarbeitungseinheit (47) umfasst, die mit einem Prozessor (49) versehen ist, wobei der Prozessor eingerichtet ist, um Messwerte von den Durchflussmessern (11, 25, 35) zu erhalten, Störungsschwellenwerte in Bezug auf die Durchflussmesser zu ermitteln oder aufzuzeichnen und die Differenzen zwischen den Messwerten zu ermitteln und sie mit den Störungsschwellenwerten zu vergleichen.

## Claims

1. A method for monitoring a dosing plant (1), the dosing plant (1) comprising a collection duct (3), a first injection hose (7) fluidly connected to the collection duct (3) and a second injection hose (23) fluidly connected to the collection duct (3), the first injection hose (7) being provided with a first flow meter (11) and the second injection hose (23) being provided with a second flow meter (25), the monitoring method comprising the following steps:
- (E1) establishment of a flow (53) of a fluid along a monitoring route (55) passing through the first injection hose (7), through the second injection hose (23) and through at least one portion (57) of the collection duct (3);
- (E2) collection of a first measurement value (59) from the first flow meter (11) and a second measurement value (61) from the second flow meter (25) when the flow (53) is established;
- (E3) determination of a difference (63) between the first measurement value (59) and the second measurement value (61);
- (E4) comparison of the difference (63) with a dysfunction threshold value (65);
- (E5) generation of a warning signal (67) if the difference is greater than the dysfunction threshold value (65).

2. The method for monitoring the dosing plant (1) according to claim 1, further comprising the following steps:
- (Ea) stopping the flow (53);
- (E1a) establishment of a fluid alternative flow (73) or of an alternative fluid according to an alternative monitoring route (75) passing through the first injection hose (7) or the second injection hose (23); through a third injection hose (33) and through at least one alternative portion (77) of the collection duct (3), the third injection hose (33) being provided with a third flow meter (35) and being fluidly connected to the collection duct (3),
- (E2a) collection of a third measurement value (81) from the third flow meter (35) and an additional measurement value (79) from the first flow meter (11) or from the second flow meter (25) when the alternative flow (73) is established,
- (E3a) determination of an additional difference (83) between the third measurement value (81) and the additional measurement value (79);
- (E4a) comparison of the additional difference (83) with the dysfunction threshold value (65) or with a dysfunction alternative threshold value (85);
- (E5a) generation of an additional warning signal (87) if the additional difference (83) is greater than the dysfunction threshold value (65) or the dysfunction alternative threshold value (85).

3. The method for monitoring the dosing plant (1) according to any of claims 1 or 2, comprising a step (E0) of arranging valves (21) of the dosing plant (1) according to a monitoring configuration (51) preceding step (E1) of establishing the flow (53) and, where appropriate, a step (E0a) of arranging the valves (21) according to an alternative monitoring configuration (71) preceding the step (E1a) of establishing the alternative flow (73).

4. The method for monitoring the dosing plant (1) according to claim 3, wherein at least one valve (21) among the valves (21) of the dosing plant (1) is formed in the collection duct (3) so that the monitoring route (55), and, where appropriate, the alternative monitoring route (75) bypasses at least one portion (17) of the collection duct (3).

5. The method for monitoring the dosing plant (1) according to any of claims 3 or 4, wherein:
- a first valve (15) among the valves (21) of the dosing plant (1) is formed in a first bypass hose (13) fluidly connecting the collection duct (3) to the first injection hose (7), the first bypass hose (13) being configured so as to enable a fluid circulation from and to the collection hose (3) via the first flow meter (11), and/or
- a second valve (29) among the valves (21) of the dosing plant (1) is formed in a second bypass hose (27) fluidly connecting the collection duct (3) to the second injection hose (23), the second bypass hose (27) being configured so as to enable a fluid circulation from and to the collection hose (3) via the second flow meter (25), and, where appropriate,
- a third valve (39) among the valves (21) of the dosing plant (1) is formed in a third bypass hose (37) fluidly connecting the collection duct (3) to the third injection hose (33), the third bypass hose (37) being configured to enable a fluid circulation from and to the collection duct (3) via the third flow meter (35).

6. The method for monitoring the dosing plant (1) according to any of the claims 1 to 5, wherein, during step (E1) of establishing the flow (53), the fluid is injected into the collection duct (3) via the first injection hose (7), or wherein, where appropriate, during step (E1a) of establishing the alternative flow (73), the fluid is injected into the collection duct (3) via the first injection hose (7) or the alternative fluid is injected into the collection duct (3) via the second injection hose (23).

7. The method for monitoring the dosing plant (1) according to any of claims 1 to 6, wherein the monitoring route (55), and, where appropriate, the alternative monitoring route (75) terminate in a collection outlet (5) of a dosed product of the dosing plant (1), said collection outlet (5) being fluidly connected to the collection duct (3).

8. The method for monitoring the dosing plant (1) according to claim 7, comprising an injection step (Ei) in which the fluid is injected into the collection duct (3) via the first injection hose (7) and/or the alternative fluid is injected into the collection hose (3) via the second injection hose (23), and, where appropriate, an additional fluid is injected into the collection duct (23) via the third injection hose (33), the injection step (Ei) preceding step (E1) of establishing the flow (53).

9. The method for monitoring the dosing plant (1) according to any of claims 1 to 8, wherein the fluid is an oil, and, where appropriate, the alternative fluid is an alternative oil.

10. The method for monitoring the dosing plant (1) according to any of claims 1 to 9, wherein step (E2) of collecting the first measurement value (59) and the second measurement value (61), or, where appropriate, step (E2a) of collecting the third measurement value (81) and the additional measurement value (83), is followed by a step (Ev) of draining the collection duct (3), the first injection hose (7), the second injection hose (23), and, where appropriate, the third injection hose (33).

11. The method for monitoring the dosing plant (1) according to claim 10, wherein the draining step (Ev) is a step of draining by gravity.

12. The method for monitoring the dosing plant (1) according to any of claims 1 to 11, wherein the first flow meter (11), the second flow meter (25), and, where appropriate, the third flow meter (35) are mass flow meters.

13. A dosing plant (1) configured to implement the steps of a monitoring method according to any of claims 1 to 12, the dosing plant (1) comprising
the collection duct (3),
the first injection hose (7) fluidly connected to the collection duct (3) and
the second injection hose (23) fluidly connected to the collection duct (3), the first injection hose (7) being provided with the first flow meter (11) and the second injection hose (23) being provided with the second flow meter (25),
the dosing plant (1) also comprising a monitoring route (55) passing through the first injection hose (7), through the second injection hose (23) and through at least the portion (57) of the collection duct (3);
the dosing plant (1) finally comprising a processing unit (47) provided with a processor (49), the processor being arranged to gather measurement values from the flow meters (11, 25, 35), determine or record dysfunction threshold values relating to the flow meters and determine differences between measurement values and compare them with dysfunction threshold values.
